# EUROPÄISCHE PATENTANMELDUNG

(11) **EP 2 581 611 A1**
(43) Veröffentlichungstag der Anmeldung: **17.04.2013**
(21) Anmeldenummer: 11008257.5
(22) Anmeldetag: 13.10.2011
(51) Int. Cl.: F16B 13/14, F16B 25/00

(54) **Befestigungsanordnung mit bifunktionaler Schraube**

(71) Anmelder: UIP GmbH & Co. KG, 63814 Mainaschaff (DE)
(72) Erfinder: Göttlich, Harald, 30900 Wedemark (DE)
(74) Vertreter: Thürer, Andreas

(57) **Zusammenfassung**

Befestigungsanordnung (10) mit einer bifunktionalen Schraube (12), wobei die bifunktionale Schraube (12) direkt in eine zuvor mit oder ohne aushärtbare Masse versehene Bohrung (14), die in einem festen Verankerungsgrund (16) eingebracht ist, eingeschraubt ist, wobei die bifunktionale Schraube (12) einen Schraubenkopf (18) mit einem Werkzeugangriff, einen im wesentlichen zylindrischen Schaft (20), vorzugsweise eine kegelstumpfartig oder pyramidenstumpfartig verjüngte Spitze (22), und mindestens zwei, vorzugsweise drei Gewindegänge (24, 26, 28) aufweist, die parallel zueinander ausgebildet sind und sich helixförmig zumindest teilweise über die Länge des Schaftes (20) erstrecken, und wobei der der Durchmesser der Bohrung (14) ohne aushärtbare Masse kleiner ist als der Durchmesser der Bohrung (14) mit aushärtbarer Masse, wobei die Bohrung (14) in beiden Fällen aber derart ist, dass alle Gewindegänge (24, 26, 28) der bifunktionalen Schraube (12) in den Verankerungsgrund (16) einschneiden.

## Beschreibung

Die Erfindung betrifft eine Befestigungsanordnung mit einer bifunktionalen Schraube.

Schwerlastbefestigungen mit Schrauben in Beton, Mauerwerk oder Gestein unterschiedlichster Ausgestaltungen sind allgemein bekannt. Bei diesen Schrauben handelt es sich um reine mechanische Verbindungen mit einem Formschluss. Des Weiteren sind Verbundanker bekannt, bei denen eine Metallstange, vorzugsweise mit einem Gewinde oder gewindeähnlichen Ausprägung in Beton, Mauerwerk oder Gestein, mittels einer aushärtbaren Masse, eingeklebt werden. Die Metallkomponente dieser Verbindung hat hierbei keinerlei Kontakt mit dem Verankerungsgrund.

Ausgehend von diesem Stand der Technik liegt der Erfindung die Aufgabe zugrunde, zwei Befestigungsanordnungen anzugeben, bei der nur eine Art von Schraube Verwendung findet, bzw. eine Befestigungsanordnung anzugeben, bei der eine bifunktionale Schraube Verwendung findet.

Diese Aufgabe wird durch eine Befestigungsanordnung mit einer bifunktionalen Schraube gelöst, wobei die bifunktionale Schraube direkt in eine zuvor entweder mit oder ohne aushärtbare Masse versehene Bohrung, die in einem festen Verankerungsgrund eingebracht ist, eingeschraubt ist, wobei die bifunktionale Schraube einen Schraubenkopf mit einem Werkzeugangriff, einen im wesentlichen zylindrischen Schaft, vorzugsweise eine kegelstumpfartig oder pyramidenstumpfartig verjüngte Spitze, und mindestens zwei, vorzugsweise drei Gewindegänge aufweist, die parallel zueinander ausgebildet sind und sich helixförmig zumindest teilweise über die Länge des Schaftes erstrecken, und wobei der Durchmesser der Bohrung ohne aushärtbare Masse kleiner ist als der Durchmesser der Bohrung mit aushärtbarer Masse, wobei die Bohrung in beiden Fällen aber derart ist, dass alle Gewindegänge der bifunktionalen Schraube in die Wandung der Bohrung bzw. den Verankerungsgrund einschneiden.

Eine solche bifunktionale Schraube eignet sich besonders gut, um stoffschlüssig durch eine aushärtbare Masse als auch kraft- bzw. formschlüssig oder nur kraft- bzw. formschlüssig im Verankerungsgrund verankert zu werden. Dabei kommt es erfindungsgemäß auch auf die unterschiedlichen Durchmesser der Bohrungen an.

Sowohl mit als auch ohne aushärtbare Masse ermöglicht die bifunktionale Schraube eine optimale Befestigungsanordnung.

Es kann vorteilhaft sein, wenn die Gewindegänge einen unterschiedlich großen Außendurchmesser oder vorzugsweise einen gleich großen Außendurchmesser aufweisen. Der Außendurchmesser eines Gewindeganges wird über den Gewindegrat gemessen. Jeder Gewindegang weist einen gleich bleibenden Außendurchmesser über die Länge des Schaftes auf. Vorzugsweise ist jeder Gewindegang als Spitzgewinde mit abgeflachter Spitze ausgebildet.

Es kann zweckmäßig sein, wenn die Gewindegänge einen unterschiedlich großen Flankenwinkel oder vorzugsweise einen gleich großen Flankenwinkel aufweisen.

Es kann von Vorteil sein, wenn die Gewindegänge gleichmäßig voneinander beabstandet und vorzugsweise an einer gemeinsamen Umfangslinie des Schaftes starten.

Vorteilhaft sind die Außendurchmesser der Gewindegänge derart bemessen, dass sich diese beim Einschrauben zumindest teilweise in die Wandung der Bohrung eingraben und furchen.

Es kann vorteilhaft sein, wenn bei einer Bohrung ohne aushärtbare Masse sich 2/8 bis 7/8, vorzugsweise 4/8 bis 7/8 der Höhe eines Gewindeganges, gemessen im rechten Winkel ausgehend von der Oberfläche des Schaftes bis zum Grat des betreffenden Gewindeganges, in die Wandung der Bohrung eingraben und furchen. Es kann vorteilhaft sein, wenn bei einer Bohrung mit aushärtbarer Masse sich 1/8 bis 6/8, vorzugsweise 1/8 bis 4/8 der Höhe eines Gewindeganges, gemessen im rechten Winkel ausgehend von der Oberfläche des Schaftes bis zum Grat des betreffenden Gewindeganges in die Wandung der Bohrung eingraben und furchen.

Dadurch verbleibt in beiden Fällen ein Ringspalt zwischen Bohrlochwandung und der bifunktionalen Schraube, welcher mit der aushärtbaren Masse, mit Bohrmehl, das beim Einschrauben der bifunktionalen Schraube ins Bohrloch entsteht, oder mit einem Gemisch aus den beiden vorgenannten Materialien zumindest teilweise, vorzugsweise vollständig befüllt ist. Eine normale Installation sieht jedoch ein Bohrmehl freies Loch vor. Ein Vorhandensein von Bohrmehl bzw. eine Vermischung von Bohrmehl mit der aushärtbaren Masse beeinflusst geringfügig die Eigenschaften der Verbindung.

Als besonders geeigneter Verankerungsgrund hat sich Beton erwiesen. Der Begriff "fester Verankerungsgrund" ist aber im Übrigen weit gefasst. Neben dem bevorzugten Beton oder auch Gasbeton wird darunter auch Natur- oder Kunststein, Fels, Mauerwerk oder dergleichen verstanden, aber beispielsweise auch ein bröckeliges Mauerwerksmaterial, weicher Ziegelstein oder ein anderer weicher Stein. Auch Holz kann einen festen Verankerungsgrund bilden.

Es kann zweckmäßig sein, wenn die aushärtbare Masse Mörtel oder ein chemisch härtender Klebstoff, vorzugsweise ein Methylmethacrylat-Klebstoff oder ein Polyester-Klebstoff oder ganz bevorzugt ein Epoxidharz-Klebstoff ist.

Es kann von Vorteil sein, wenn der Durchmesser der Bohrung ohne aushärtbare Masse 1/10 bis 4/10, vorzugsweise 1/10 bis 2/10, kleiner ist als der Durchmesser der Bohrung mit aushärtbarer Masse.

Nachfolgend wird die Erfindung anhand eines Ausführungsbeispiels erläutert, das in der Zeichnung dargestellt ist. In dieser zeigt
- Fig. 1: zwei erfindungsgemäße Befestigungsanordnungen mit einer bifunktionalen Schraube in Seitenansicht und
- Fig. 2: zwei erfindungsgemäße Befestigungsanordnungen mit einer bifunktionalen Schraube gemäß Fig. 1 in Teilansicht in einer Querschnittsebene (B).

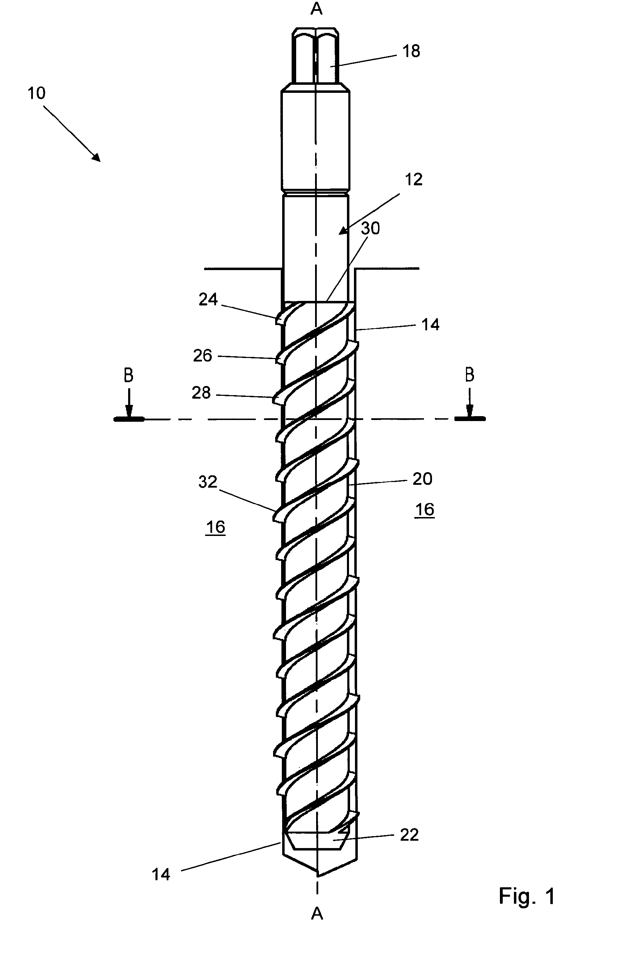

In Fig. 1 werden zwei Befestigungsanordnungen 10 veranschaulicht.

Die links der Teilungsebene A - A angeordnete Seite bezieht sich auf eine rein mechanische Befestigungsanordnung 10, bei der sich die bifunktionale Schraube 12 direkt und ohne Dübel in eine ohne aushärtbare Masse versehene Bohrung 14, die in einem festen Verankerungsgrund 16 eingebracht ist, einschraubt.

Die rechts der Teilungsebene A - A angeordnete Seite bezieht sich auf eine Befestigungsanordnung 10, bei der die bifunktionale Schraube 12 direkt in eine zuvor mit aushärtbarer Masse versehene Bohrung 14, die in einem festen Verankerungsgrund 16 eingebracht ist, eingeschraubt ist.

Fig. 1 macht deutlich, dass nur eine Art der erfindungsgemäßen Schraube 12 in zwei unterschiedlichen Befestigungsanordnungen 10 Verwendung findet. Daher kann in diesem Fall von einer bifunktionalen Schraube 12 gesprochen werden.

Die bifunktionale Schraube 12 weist einen Schraubenkopf 18 mit einem Werkzeugangriff, einen im wesentlichen zylindrischen Schaft 20, vorzugsweise eine kegelstumpfartig oder pyramidenstumpfartig verjüngte Spitze 22, und mindestens zwei, vorzugsweise drei Gewindegänge 24, 26, 28 auf, die parallel zueinander ausgebildet sind und sich helixförmig zumindest teilweise über die Länge des Schaftes 20 erstrecken.

Erfindungsgemäß ist der Durchmesser der Bohrung 14 ohne aushärtbare Masse kleiner als der Durchmesser der Bohrung 14 mit aushärtbarer Masse. Dies ist in Fig. 1 deutlich zu erkennen.

Die Bohrung 14 ist aber in beiden Fällen, also sowohl auf der linken als auch auf der rechten Seite der Teilungsebene A-A derart, dass alle Gewindegänge 24, 26, 28 der bifunktionalen Schraube 12 in den Verankerungsgrund 16 bzw. in die Wandung der Bohrung 14 einschneiden.

Die in Fig. 1 dargestellte bifunktionale Schraube 12 weist eine kegelstumpfförmig leicht verjüngte Spitze 22 an einem vorderen Schraubenende und einen Schraubenkopf 18 an einem hinteren Schraubenende auf. Die kegelstumpfförmig verjüngte Spitze 22 erleichtert das Einführen der bifunktionale Schraube 12 in die Bohrung 14 des Verankerungsgrundes 16 und ermöglicht ein Einschneiden der Gewindegänge mit geringem Drehmoment.. Im dargestellten Ausführungsbeispiel ist der Schraubenkopf 18 in einem beispielhaften Werkzeugangriff ausgebildet; diese Kopfform ist vorteilhaft, aber nicht zwingend.

Die hier dargestellte bifunktionale Schraube 12 weist drei Gewindegänge 24, 26 und 28 auf, die sich helixförmig über die Länge des Schaftes 20 erstrecken. Die Gewindegänge 24, 26 und 28 weisen den gleichen Außendurchmesser, gemessen über den Grat 32, und den gleichen Flankenwinkel α sowie die gleiche Steigung auf.

Weiterhin ist in Fig. 1 gut zu erkennen, dass bei der auf der linken Seite der Teilungsebene A-A gezeigten Bohrung 14 ohne aushärtbare Masse sich 4/8 bis 7/8 der Höhe eines Gewindeganges 24, 26, 28, gemessen im rechten Winkel ausgehend von der Oberfläche des Schaftes 20 bis zum Grat 32 des betreffenden Gewindeganges 24, 26, 28, in die Wandung der Bohrung 14 eingraben und furchen.

Auch ist in Fig. 1 gut zu erkennen, dass bei der auf der rechten Seite der Teilungsebene A-A gezeigten Bohrung 14 mit aushärtbarer Masse sich 1/8 bis 4/8 der Höhe eines Gewindeganges 24, 26, 28, gemessen im rechten Winkel ausgehend von der Oberfläche des Schaftes 20 bis zum Grat 32 des betreffenden Gewindeganges 24, 26, 28, in die Wandung der Bohrung 14 eingraben und furchen.

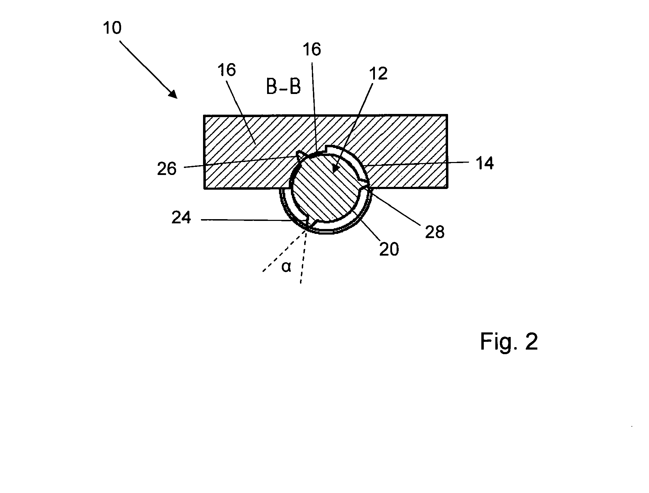

Fig. 2 zeigt die zwei erfindungsgemäßen Befestigungsanordnungen mit bifunktionaler Schraube gemäß Fig. 1 in Teilansicht in einer Querschnittsebene (B). Die Gewindegänge 24, 26, 28 sind vorteilhaft gleichmäßig voneinander beabstandet und starten an einer gemeinsamen Umfangslinie 30 des Schaftes 20. Im Übrigen wird zwecks Vermeidung von Wiederholungen auf die Beschreibung gemäß Fig. 1 verwiesen, wobei gleiche Bezugsziffern gleiche Teile bezeichnen.

Selbstverständlich ist die Erfindung nicht auf das Ausführungsbeispiel beschränkt, sondern im Rahmen der Offenbarung vielfach variabel.

### Bezugszeichenliste

### (ist Teil der Beschreibung)

- 10: Befestigungsanordnung
- 12: bifunktionale Schraube
- 14: Bohrung
- 16: Verankerungsgrund
- 18: Schraubenkopf
- 20: Schaft
- 22: Spitze
- 24: 1. Gewindegang
- 26: 2. Gewindegang
- 28: 3. Gewindegang
- 30: Umfangslinie
- 32: Grat

- α: Flankenwinkel eines Gewindeganges

## Patentansprüche

1. Befestigungsanordnung (10) mit einer bifunktionalen Schraube (12), wobei die bifunktionale Schraube (12) direkt in eine zuvor mit oder ohne aushärtbare Masse versehene Bohrung (14), die in einem festen Verankerungsgrund (16) eingebracht ist, eingeschraubt ist, wobei die bifunktionale Schraube (12) einen Schraubenkopf (18) mit einem Werkzeugangriff, einen im wesentlichen zylindrischen Schaft (20), vorzugsweise eine kegelstumpfartig oder pyramidenstumpfartig verjüngte Spitze (22), und mindestens zwei, vorzugsweise drei Gewindegänge (24, 26, 28) aufweist, die parallel zueinander ausgebildet sind und sich helixförmig zumindest teilweise über die Länge des Schaftes (20) erstrecken, und wobei der der Durchmesser der Bohrung (14) ohne aushärtbare Masse kleiner ist als der Durchmesser der Bohrung (14) mit aushärtbarer Masse, wobei die Bohrung (14) in beiden Fällen aber derart ist, dass alle Gewindegänge (24, 26, 28) der bifunktionalen Schraube (12) in den Verankerungsgrund (16) einschneiden.

2. Befestigungsanordnung (10) nach Anspruch 1, **dadurch gekennzeichnet, dass** die Gewindegänge (24, 26, 28) einen unterschiedlich großen Außendurchmesser oder vorzugsweise einen gleich großen Außendurchmesser aufweisen.

3. Befestigungsanordnung (10) nach Anspruch 1 oder 2, **dadurch gekennzeichnet, dass** die Gewindegänge (24, 26, 28) einen unterschiedlich großen Flankenwinkel (α) oder vorzugsweise einen gleich großen Flankenwinkel (α) aufweisen.

4. Befestigungsanordnung (10) nach einem der Ansprüche 1 bis 3, **dadurch gekennzeichnet, dass** die Gewindegänge (24, 26, 28) gleichmäßig voneinander beabstandet und vorzugsweise an einer gemeinsamen Umfangslinie (30) des Schaftes (20) starten.

5. Befestigungsanordnung (10) nach einem der Ansprüche 1 bis 4, **dadurch gekennzeichnet, dass** die Außendurchmesser der Gewindegänge (24, 26, 28) derart bemessen sind, dass sich diese (24, 26, 28) beim Einschrauben zumindest teilweise in die Wandung der Bohrung (14) eingraben und furchen.

6. Befestigungsanordnung (10) nach Anspruch 5, **dadurch gekennzeichnet, dass** bei einer Bohrung (14) ohne aushärtbare Masse sich 2/8 bis 7/8, vorzugsweise 4/8 bis 7/8 der Höhe eines Gewindeganges (24, 26, 28), gemessen im rechten Winkel ausgehend von der Oberfläche des Schaftes (20) bis zum Grat (32) des betreffenden Gewindeganges (24, 26, 28) in die Wandung der Bohrung (14) eingraben und furchen.

7. Befestigungsanordnung (10) nach Anspruch 5, **dadurch gekennzeichnet, dass** bei einer Bohrung (14) mit aushärtbarer Masse sich 1/8 bis 6/8, vorzugsweise 1/8 bis 4/8 der Höhe eines Gewindeganges (24, 26, 28), gemessen im rechten Winkel ausgehend von der Oberfläche des Schaftes (20) bis zum Grat (32) des betreffenden Gewindeganges (24, 26, 28) in die Wandung der Bohrung (14) eingraben und furchen.

8. Befestigungsanordnung (10) nach einem der Ansprüche 1 bis 7, **dadurch gekennzeichnet, dass** der Verankerungsgrund (14) Beton, Mauerwerk, Gasbeton, Gestein oder Holz ist.

9. Befestigungsanordnung (10) nach einem der Ansprüche 1 bis 8, **dadurch gekennzeichnet, dass** die aushärtbare Masse Mörtel oder ein chemisch härtender Klebstoff, vorzugsweise ein Methylmethacrylat-Klebstoff oder ein Polyester-Klebstoff oder ganz bevorzugt ein Epoxidharz-Klebstoff ist.

10. Befestigungsanordnung (10) nach einem der Ansprüche 1 bis 9, **dadurch gekennzeichnet, dass** der Durchmesser der Bohrung (14) ohne aushärtbare Masse 1/10 bis 4/10, vorzugsweise 1/10 bis 2/10, kleiner ist als der Durchmesser der Bohrung (14) mit aushärtbarer Masse.
